# FASCICULE DE BREVET EUROPEEN

(11) **EP 0 686 538 B1**
(45) Date de publication et mention de la délivrance du brevet: **06.05.1998**
(21) Numéro de dépôt: 95108598.4
(22) Date de dépôt: 06.06.1995
(51) Int. Cl.: B60S 1/38

(54) **Essuie-glace de véhicule automobile**
Scheibenwischer eines Kraftfahrzeugs
Windscreen wiper for a motor vehicle

(30) Priorité: 08.06.1994 FR 9407108
(43) Date de publication de la demande: 13.12.1995
(73) Titulaire: VALEO SYSTEMES D'ESSUYAGE, 78321 La Verrière (FR)
(72) Inventeur: Teindas, Jean-Louis, F-63190 Ravel (FR)
(74) Mandataire: Gamonal, Didier

(56) Documents cités:
- EP-A- 0 281 397
- DE-A- 4 025 280
- FR-A- 2 499 921
- GB-A- 2 030 850
- US-A- 4 909 653

## Description

La présente invention concerne un essuie-glace de véhicule automobile.

L'invention concerne notamment un essuie-glace qui comporte au moins un élément allongé en tôle découpée et pliée, qui est par exemple constitué par l'étrier principal de la structure de support de la lame d'essuyage du balai d'essuie-glace, qui présente, en section par un plan transversal, une forme de U renversé constituée par deux joues latérales verticales parallèles reliées entre elles par un dos.

Un exemple d'un tel type d'élément d'essuie-glace est décrit et représenté dans le document EP-B1-0236.061.

Selon la conception connue décrite et représentée dans ce document, au moins une extrémité de l'élément allongé peut être équipée d'un élément anti-bruit qui comporte des moyens d'accrochage à l'extrémité de l'élément allongé.

Selon cette conception, la portion d'extrémité de l'élément allongé est une portion rectiligne, c'est-à-dire que le dos supérieur est sensiblement plan.

Afin d'améliorer l'aérodynamique et l'esthétique de l'élément allongé, il est souhaitable de conférer à celui-ci, au moins dans sa portion d'extrémité, une courbure convexe du dos supérieur.

Une conception selon laquelle cette courbure est obtenue par cintrage de la portion d'extrémité de l'élément allongé, après les opérations de découpe et de pliage, s'est avérée insatisfaisante dans la mesure ou elle rend difficile, voire impossible, le montage de l'élément anti-bruit à l'extrémité.

La présente invention a pour but de proposer une nouvelle conception pour un élément allongé d'essuie-glace du type mentionné précédemment qui permet de remédier à cet inconvénient tout en lui conférant la courbure souhaitée.

Dans ce but, l'invention propose un essuie-glace du type mentionné précédemment tel que divulgué dans EP-A-0 236 061, caractérisé en ce que, à l'une des extrémités de l'élément allongé, le dos présente une zone d'épaisseur réduite de manière à conférer une courbure à la face extérieure de l'élément allongé dans la portion d'extrémité associée.

Selon divers modes de réalisation de l'invention :
- la face intérieure du dos est plane dans la portion d'extrémité ;
- la zone d'épaisseur réduite est réalisée par écrasement lors des opérations de découpe de l'élément allongé ;
- le bord transversal d'extrémité du dos comporte une patte d'accrochage pour un élément anti-bruit ;
- l'essuie-glace comporte un élément anti-bruit agencé à l'extrémité de l'élément allongé et à l'intérieur de ce dernier ;
- l'élément anti-bruit comporte un corps prévu pour être inséré à l'intérieur de l'élément allongé et qui présente une forme extérieure qui épouse la forme intérieure de l'élément allongé, et comporte un rebord extérieur qui prolonge longitudinalement l'élément allongé et dont la forme extérieure est complémentaire de la forme extérieure de l'élément allongé dans la portion d'extrémité ;
- dans la portion d'extrémité, les joues comportent des découpes qui reçoivent des parties complémentaire de l'élément anti-bruit ;
- l'extrémité de l'élément anti-bruit qui s'étend à l'extérieur de l'élément allongé est ouverte ;
- l'extrémité de l'élément anti-bruit qui s'étend à l'extérieur de l'élément allongé est fermée et profilée ; et
- l'élément allongé est un étrier principal d'un balai d'essuie-glace.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective d'un premier mode de réalisation de l'invention qui illustre la portion d'extrémité d'un étrier principal d'un balai d'essuie-glace et un élément anti-bruit associé ;
- la figure 2 illustre une variante de réalisation de l'élément anti-bruit représenté sur la figure 1 ;
- la figure 3 est une vue schématique latérale en élévation de la portion d'extrémité de l'étrier principal associé à l'élément anti-bruit illustré sur la figure 2 ; et
- la figure 4 est une vue schématique de la tôle découpée et amincie, avant pliage, pour la réalisation de l'élément allongé illustré sur la figure 1.

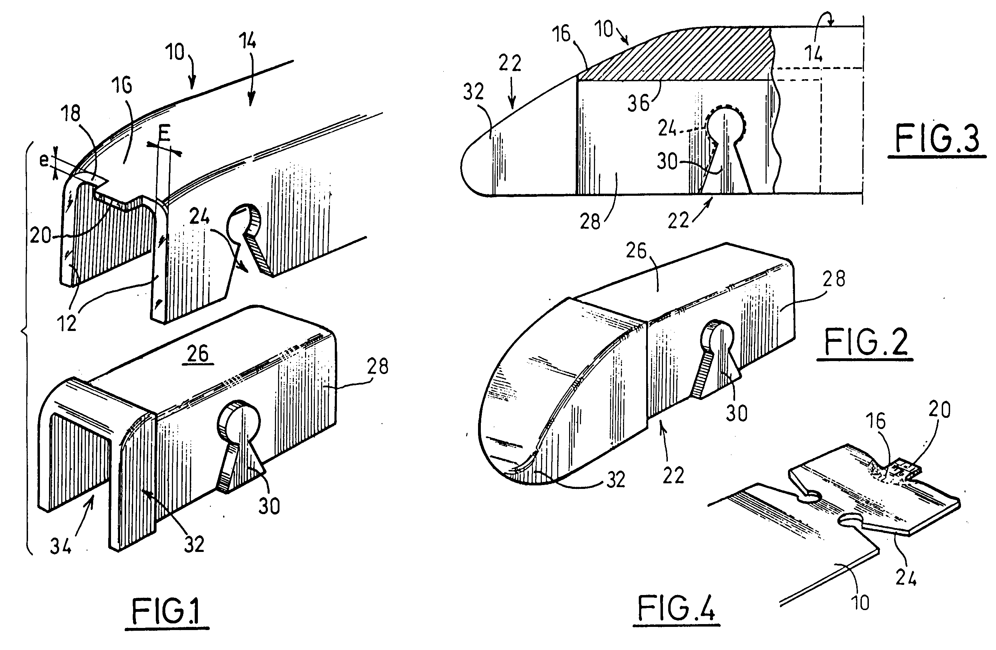

La portion d'extrémité 10 d'un étrier principal d'un balai d'essuie-glace illustrée sur la figure 1 présente, en section transversale, une forme générale de U renversé.

Elle est constituée par deux joues latérales parallèles et verticales 12 qui sont reliées entre elles par un dos supérieur 14.

Dans sa partie principale, à droite en considérant la figure 1, l'élément allongé 10 est réalisé en une tôle d'épaisseur sensiblement constante qui correspond à l'épaisseur "E" des joues latérales 12 qui est constante sur toute la longueur de l'élément allongé, y compris dans la portion d'extrémité, à gauche en considérant la figure 1.

Conformément à l'invention, dans la portion d'extrémité libre de l'élément allongé 10, l'épaisseur "e" du dos supérieur est réduite par rapport à l'épaisseur "E" de façon à conférer à la face supérieure 16 du dos 14 une courbure convexe.

Le bord latéral d'extrémité libre 18 du dos 14 se prolonge par une patte 20 pour l'accrochage d'un élément anti-bruit 22.

Les moyens pour l'accrochage de l'élément anti-bruit 22 comprennent également des découpes 24 formées symétriquement dans les deux joues latérales 12 au voisinage de la portion d'extrémité de l'élément allongé 10.

Selon une conception connue, dont différents exemples sont donnés dans le document EP-B1-0.236.061, l'élément anti-bruit 22 est un élément moulé en matière plastique qui est constitué pour l'essentiel par un corps 26 dont la forme extérieure parallélépipédique rectangle est prévue pour épouser la forme intérieure de la portion d'extrémité de l'élément allongé 10 qui reçoit le corps 26.

Les faces latérales 28 du corps 26 comportent des portions en relief 30 dont les contours sont complémentaires des découpes 24 formées dans les joues latérales 12 pour assurer l'emboîtement en position de l'élément anti-bruit en coopération avec la patte 20 qui est reçue dans une encoche complémentaire (non représentée) qui est formée dans le bord d'extrémité libre 32 de l'élément anti-bruit 22 qui, en position montée, fait saillie à l'extérieur de l'élément allongé et prolonge ce dernier.

Afin de parfaire l'aérodynamique de l'ensemble, la forme extérieure du bord 32 est complémentaire de la forme extérieure de la portion d'extrémité de l'élément allongé 10.

Dans le mode de réalisation illustré sur la figure 1, le bord 32 de l'élément anti-bruit 22 présente une section rectangulaire ouverte 34, par exemple pour le passage d'une branche d'un étrier secondaire de la structure de support de la lame d'essuyage du balai d'essuie-glace qui est articulée à l'intérieur de l'élément anti-bruit selon une technique connue, l'élément anti-bruit 22 ayant également pour fonction d'assurer l'articulation et le maintien en place de l'étrier secondaire par rapport à l'étrier principal.

Dans la variante de réalisation illustrée sur la figure 2, l'extrémité 32 de l'élément anti-bruit 22 qui fait saillie à l'extérieur de l'élément allongé 10, est une d'extrémité fermée et profilée.

Comme on peut le voir sur la figure 3, la portion d'extrémité de l'élément allongé 10, prolongée par le bord d'extrémité 32 de l'élément anti-bruit 22, est profilée dans sa face supérieure 16 qui présente une courbure convexe.

Comme on peut le voir également sur la figure 3, la face intérieure 36 du dos 14, dans la zone d'extrémité, conserve une forme sensiblement plane de manière à ne pas nuire à l'adaptabilité et à la facilité de montage de l'élément anti-bruit 22.

Comme on l'a représenté de manière schématique sur la figure 4, la portion amincie d'épaisseur réduite "e" du dos de l'élément 10 peut être obtenue par écrasement local, figuré par un trait mixte sur la figure 4, au moyen d'un outil qui réalise cet écrasement simultanément avec les opérations de découpe et de poinçonnage.

## Revendications

1. Essuie-glace de véhicule automobile du type comportant au moins un élément allongé (10) en tôle découpée et pliée qui présente, en section par un plan transversal, une forme de U renversé constituée par deux joues latérales verticales (12) reliées entre elles par un dos (14), caractérisé en ce que, à l'une des extrémités de l'élément allongé (10), le dos (14) présente une zone (16) d'épaisseur réduite (e) de manière à conférer une courbure à la face extérieure (16) de l'élément allongé dans la portion d'extrémité associée.

2. Essuie-glace selon la revendication 1, caractérisé en ce que la face intérieure (36) du dos (14) est sensiblement plane dans la portion d'extrémité.

3. Essuie-glace selon l'une des revendications 1 ou 2, caractérisé en ce que la zone d'épaisseur réduite (e) est réalisée par écrasement lors des opérations de découpe de l'élément allongé (10).

4. Essuie-glace selon l'une quelconque des revendications précédentes, caractérisé en ce que le bord transversal d'extrémité (18) du dos (14) comporte une patte (20) d'accrochage pour un élément anti-bruit (22).

5. Essuie-glace selon l'une quelconque des revendications précédentes, caractérisé en ce qu'il comporte un élément anti-bruit (22) agencé à l'extrémité de l'élément allongé (10) et à l'intérieur de ce dernier.

6. Essuie-glace selon la revendication 5, caractérisé en ce que l'élément anti-bruit (22) comporte un corps (26) prévu pour être inséré à l'intérieur de l'élément allongé (10), qui présente une forme extérieure qui épouse la forme intérieure de l'élément allongé (10), qui comporte un rebord extérieur (32) qui prolonge longitudinalement l'élément allongé (10) et dont la forme extérieure est complémentaire de la forme extérieure de l'élément allongé (10) dans la portion d'extrémité.

7. Essuie-glace selon l'une des revendications 5 ou 6, caractérisé en ce que, dans la portion d'extrémité, les joues latérales (12) comportent des découpes (24) qui reçoivent des parties complémentaires (30) de l'élément anti-bruit (22).

8. Essuie-glace selon la revendication 6, caractérisé en ce que l'extrémité libre de l'élément anti-bruit qui s'étend à l'extérieur de l'élément allongé (10) est ouverte.

9. Essuie-glace selon la revendication 6, caractérisé en ce que l'extrémité libre de l'élément anti-bruit (22) qui s'étend à l'extérieur de l'élément allongé (10) est fermée et profilée.

10. Essuie-glace selon l'une quelconque des revendications précédentes, caractérisé en ce que l'élément allongé (10) est un étrier principal d'un balai d'essuie-glace.

## Claims

1. A motor vehicle screen wiper, of the type comprising at least one elongate element (10) of press-formed and bent sheet metal, which has, in cross section through a transverse plane, the form of an inverted U comprising two vertical side portions (12) joined together through a spine portion (14), characterised in that, at one of the ends of the elongate element (10), the spine portion (14) has a zone (16) of reduced thickness (e), such as to give a curvature to the outer face (16) of the elongate element in the associated end portion.

2. A screen wiper according to Claim 1, characterised in that the internal face (36) of the spine portion (14) is substantially flat in the end portion.

3. A screen wiper according to Claim 1 or Claim 2, characterised in that the zone of reduced thickness (e) is formed by coining during the operations of press-forming the elongate element (10).

4. A screen wiper according to any one of the preceding Claims, characterised in that the transverse terminal edge (18) of the spine portion (14) includes a lug (20) for clipping attachment of a sound deadening element (22).

5. A screen wiper according to any one of the preceding Claims, characterised in that it includes a sound deadening element (22) arranged at the end of the elongate element (10) and within the latter.

6. A screen wiper according to Claim 5, characterised in that the sound deadening element (22) comprises a body portion (26) which is arranged to be inserted into the interior of the elongate element (10), has an external form which matches the internal form of the elongate element (10), and includes an external flange portion (32) which extends the elongate element (10) longitudinally and has an external shape which is complementary to the external shape of the elongate element (10) in the end portion.

7. A screen wiper according to Claim 5 or Claim 6, characterised in that, in the end portion, the side portions (12) are formed with notches (24) which receive complementary portions (30) of the sound deadening element (22).

8. A screen wiper according to Claim 6, characterised in that the free end of the sound deadening element that lies outside the elongate element (10) is open.

9. A screen wiper according to Claim 6, characterised in that the free end of the sound deadening element (22) that lies outside the elongate element (10) is closed and profiled.

10. A screen wiper according to any one of the preceding Claims, characterised in that the elongate element (10) is a main yoke of a screen wiper blade.

## Patentansprüche

1. Scheibenwischer eines Kraftfahrzeugs, umfassend mindestens ein längliches Element (10) aus gestanztem und gebogenem Blech, das im Schnitt durch eine Querebene eine umgekehrte U-Form aufweist, die durch zwei parallele vertikale Seitenwangen (12) gebildet wird, die durch einen Rücken (14) miteinander verbunden sind, **dadurch gekennzeichnet**, daß an einem der Enden des länglichen Elements (10) der Rücken (14) einen Bereich (16) mit geringerer Dicke (e) aufweist, um der Außenseite (16) des länglichen Elements in dem zugehörigen Endabschnitt eine Krümmung zu verleihen.

2. Scheibenwischer nach Anspruch 1 , **dadurch gekennzeichnet,** daß die Innenseite (36) des Rückens (14) im Endabschnitt in etwa eben ist.

3. Scheibenwischer nach einem der Ansprüche 1 oder 2, **dadurch gekennzeichnet,** daß der Bereich mit geringerer Dicke (e) durch Stauchen bei den Vorgängen zum Stanzen des länglichen Elements (10) ausgeführt wird.

4. Scheibenwischer nach einem der vorangehenden Ansprüche, **dadurch gekennzeichnet**, daß die Querabschlußkante (18) des Rückens (14) einen Einhakansatz (20) für ein Geräuschdämpferelement (22) umfaßt.

5. Scheibenwischer nach einem der vorangehenden Ansprüche, **dadurch gekennzeichnet**, daß er ein Geräuschdämpferelement (22) umfaßt, das am Ende des länglichen Elements (10) und in dessen Innern angeordnet ist.

6. Scheibenwischer nach Anspruch 5 , **dadurch gekennzeichnet**, daß das Geräuschdämpferelement (22) einen Körper (26) umfaßt, der für das Einsetzen im Innern des länglichen Elements (10) vorgesehen ist, der eine äußere Form aufweist, die sich an die innere Form des länglichen Elements (10) anpaßt, und der eine äußere Randleiste (32) umfaßt, die das längliche Element (10) in Längsrichtung verlängert und deren äußere Form formschlüssig zur äußeren Form des länglichen Elements (10) im Endabschnitt ist.

7. Scheibenwischer nach einem der Ansprüche 5 oder 6, **dadurch gekennzeichnet,** daß im Endabschnitt die Seitenwangen (12) Einschnitte (24) enthalten, in die formschlüssige Teile (30) des Geräuschdämpferelements (22) eingesetzt werden.

8. Scheibenwischer nach Anspruch 6 , **dadurch gekennzeichnet**, daß das freie Ende des Geräuschdämpferelements, das sich außerhalb des länglichen Elements (10) erstreckt, offen ist.

9. Scheibenwischer nach Anspruch 6 , **dadurch gekennzeichnet**, daß das freie Ende des Geräuschdämpferelements (22), das sich außerhalb des länglichen Elements (10) erstreckt, geschlossen und profiliert ist.

10. Scheibenwischer nach einem der vorangehenden Ansprüche, **dadurch gekennzeichnet**, daß das längliche Element (10) ein Hauptbügel eines Scheibenwischerblatts ist.
